# EUROPEAN PATENT SPECIFICATION

(11) **EP 4 419 429 B1**
(45) Date of publication and mention of the grant of the patent: **04.03.2026**
(21) Application number: 22803266.0
(22) Date of filing: 19.10.2022
(51) Int. Cl.: B64U 50/37, A01G 23/00, G05D 1/00, B64U 50/19

(54) **FORESTRY MONITORING SYSTEM**
SYSTEM ZUR ÜBERWACHUNG DER FORSTWIRTSCHAFT
SYSTÈME DE SURVEILLANCE FORESTIER

(30) Priority: 21.10.2021 SE 2151285
(43) Date of publication of application: 28.08.2024
(73) Proprietor: Komatsu Forest AB, 907 04 Umeå (SE)
(72) Inventor: NILSSON, Erik, 913 42 UMEÅ (SE); ASSARSSON, Peter, 905 91 UMEÅ (SE)
(74) Representative: AWA Sweden AB
(86) International application number: PCT/EP2022/079124
(87) International publication number: WO 2023/067015

(56) References cited:
- US-A1- 2014 077 969
- US-A1- 2017 096 222
- US-A1- 2020 146 226
- US-B2- 10 322 803

## Description

### TECHNICAL FIELD

The present disclosure relates to a system for monitoring forestry activities. More particularly, the present disclosure relates to a system for monitoring and determining path decisions for forestry machines undergoing forestry operations.

### BACKGROUND

When carrying out forestry operations, a forestry site may be planned out to have a plurality of logging roads, thus providing driving paths for forestry machines carrying out forestry operations. The logging roads may be formed by a harvester (or other forestry work) felling trees and/or otherwise clearing the driving path to enable forestry machines to traverse the driving paths.

Typically, the planning and analysis of a forestry site may be carried out by human operators of the forestry machines. Aerial photography may be employed in this planning and analysis to inform the human planning. That is, the human operators may review aerial photography to manually evaluate the proposed locations for logging roads, the quality of trees in the forestry site, and/or other qualities and characteristics of the forestry site. The human operators may be provided with a schedule of environmental requirements for the forestry site, which must be adhered to during forestry operations.

Some software solutions have been developed to assist with the planning of forestry driving paths/logging roads, relying on available survey imagery such as publicly available satellite overview imagery. However, such solutions are unable to (and unsuitable for) guiding forestry machines through the forestry site during forestry operations. US 10 322 803 B2 discloses a method including generating an unmanned aerial vehicle (UAV) control signal to fly the UAV over a worksite and capture imagery information at different geographic locations. The imagery information is used to generate a tree inventory metric that indicates a tree inventory at the worksite, or is used to generate a productivity metric that identifies a productivity category for a geographic location at the worksite. The method also generates an action signal based on the tree inventory metric or productivity metric, such as an action signal to deploy machines to different geographic location, or an action signal to update a worksite completion metric.

### SUMMARY OF INVENTION

According to an aspect of the present invention, there is provided a forestry monitoring system comprising an unmanned aerial vehicle (UAV) and a computing device. In essence, it can be considered that the UAV and the computing device overcome many shortcomings in respect of the forestry monitoring that can be carried out by humans and can be employed for guiding forestry machines through a forestry site during forestry operations.

The UAV comprises an electrical energy storage, an electric motor powered by the electrical energy storage, a propulsion arrangement driven by the electric motor and configured to aerially manoeuvre the UAV, and an imaging arrangement configured to collect information about a forestry site, the forestry site having one or more forestry machines performing forestry operations therein.

The electrical energy storage may be one or a bank of batteries, capacitors and/or some other energy storage system configured to be charged or discharged via connection to an electrical energy generator or an electrical load, respectively.

The computing device is configured to obtain the collected information from the UAV, process the collected information to determine monitoring information for the forestry site, and determine a path decision for at least one of the one or more forestry machines based on the determined monitoring information of the forestry site.

By employing a system comprising a UAV, greater information about the forestry site can be collected than by a human, in real time. Thus, a reliance on human observation is reduced and human workers can be focussed on functions which are more reliant on human intervention, such as harvester operations.

Furthermore, by collected information via an imaging arrangement on the UAV, the collected information is processed by a computing device, for example through the application on of AI or ML techniques, thus enabling the generation of monitoring information, which can be more readily understood by humans and/or more readily provided as input for automated systems such as self-driving forestry machines.

As a consequence, forestry operations may be carried out using self-driving forestry machines, as the UAV can provide an overview of the forestry site and thus provide guidance for self-driving machines. Guidance of self-driving machines based on monitoring information can take into account environmental requirements, such as a particular level of permitted ground impact, waterlogged paths, etc. Thus, the present system allows for a better control of environmental impact by a forestry operation, hence a reduction thereof.

In some examples, the computing device may be remote from the UAV and, in order for the computing device to obtain the collected information from the UAV, the UAV may further comprise a transmitter configured to transmit the collected information to the computing device.

Thus, the UAV may advantageously offload computation to a remote computing device and the weight of the UAV can be reduced accordingly. Consequently, the energy efficiency of the forestry monitoring system can be improved.

For example, the computing device may be comprised in a remote server environment such as a cloud computing environment. Thus, the computing capacity employed in processing the collected information can be scaled according to need, enabling the efficient application of artificial intelligence (AI) and/or machine learning (ML) techniques.

Alternatively, the computing device may be comprised in one of the one or more forestry machines. Therefore, the UAV may not need to be configured for long range wireless communications, which may further reduce the weight of the UAV as a transmitter (or a larger transmitter) may not be required. Furthermore, forestry sites can be relatively remote and therefore poorly covered by communications networks such as 3G/4G/5G networks etc. Thus, by including the computing device in one of the forestry machines in the forestry site that the UAV is monitoring, the reliable communication of collected information from the UAV to the computing device can be ensured.

According to some examples, the imaging arrangement may comprise at least one of a RGB camera, a stereo camera, RADAR (radio detection and ranging), LIDAR (light detection and ranging), and a thermal imaging camera, or some combination thereof. The imaging arrangement may be mounted in one position or multiple positions around the UAV and may capture intermittently or constantly, depending on the implementation.

The monitoring information determined from the processing of the collected information may include at least one of:
- a position of at least one forestry machine;
- one or more existing driving paths in the forestry site;
- a depth of an impression left by a forestry machine on a driving path;
- an amount of accumulated water on a driving path;
- a location of an obstruction in the forestry site;
- a topology of the forestry site;
- a tree number assessment for trees in the forestry site;
- a tree quality assessment for trees in the forestry site;
- an incidence of fire in the forestry site; and
- a progress of the forestry operations in the forestry site.

The position of at least one forestry machine may be determined by applying image processing techniques to parse the collected information (e.g. images) from the imaging arrangement and apply object detection algorithms, for example, to identify the presence of a forestry machine. The location of the forestry machine in the forestry scene may then be determined by mapping a vector between a location of the UAV (e.g. known by GNSS or some other means) and the position of the detected forestry machine in the image.

Similar image processing and object detection algorithms (which may employ one or more AI or ML techniques) may be employed for detecting one or more existing driving paths in the forestry site. The forestry site may have one or more base roads, which can be thought of as main or primary roads through the forestry site. The forestry site may then have one or more so-called 'stick roads' emanating from the base road(s), which can be thought of as auxiliary or secondary roads through the forestry site.

By processing the collected information to determine the one or more existing driving paths, the forestry monitoring system can be specifically directed to monitor such driving paths. For example, the monitoring information may include a depth of an impression left by a forestry machine on a driving path or an amount of accumulated water on a driving path.

As an example, the depth of an impression may be determined by flying the UAV at a particular altitude (e.g. as determined by a GNSS system) and use the imaging arrangement to collect depth information for the driving path (or a portion thereof). The depth variation may be measured whilst passing across the driving path, thus providing a value for the depth of the impression relative to the neighbouring ground. Additionally or alternatively, the UAV may pass over the driving path at the same altitude so as to provide a value for the depth of the impression at a later time, thus allowing the forestry monitoring system to detect a change in depth of impression left by forestry machines in the driving path.

As another example, RADAR, LIDAR, thermal imaging, or some other appropriate imaging element may be employed to detect the presence of water in the driving paths, which may have accumulated from groundwater, rain, or some other water source. The detection of waterlogged driving paths is advantageous for informing path decisions for forestry machines as well as preserving an adherence to environmental regulations for the forestry site, which may require an avoidance of waterlogged paths having standing water.

Obstructions in the forestry site, and the topology of the forestry site, may be detected by processing a collected depth map for the forestry site, which may show protrusions from the ground (which could be identified as boulders, fallen trees, etc.) or cliff edges, steep slopes, and the like, which may be useful to inform driving path decisions for forestry machines in the forestry site.

A tree number and quality may also be assessed through image processing techniques. For example, a straightness of a tree may be measured as a metric of its quality. To measure a straightness of a tree, the base of the tree may be identified in an image (e.g. from a RGB camera or another type of camera), and then a higher position may be identified in an image. Thereafter, a deviation of the trunk of the tree may be measured from a perfect straight line between the identified base and higher position, and this may be output as a numerical metric, a binary metric, or some other metric indicative of straightness or quality.

Thus, it is possible for the forestry monitoring system to assist in a generation of forestry driving paths that maximise a number of high quality trees during forestry operations. That is, an algorithm such as Chinese Postman algorithm, or some other form of path minimisation technique (e.g. employing ML or AI techniques) may be applied to generate optimum driving paths for the forestry machines based on the available monitoring information.

By collecting monitoring information in this way, and generating path decisions based thereon, driving paths can be determined in a superior manner than what is achievable by a human operator on the ground. Thus, the work efficiency and environmental impact of the forestry operations can be greatly improved.

The forestry monitoring system may serve a further purpose as a fire monitor. That is, one of the elements of the imaging arrangement may be configured to detect an incidence of fire at the forestry site, and generate a notification of the same. Thus, a fire may be detected at an earlier time than would otherwise be detected by humans on the ground.

The path decision determined by the computing device may comprise selecting a driving path for the forestry machine from a plurality of determined existing driving paths in the forestry site or determining a new driving path for the forestry machine.

It may be decided to determine a new driving path if no suitable driving path exists for a given destination, from a given origin. In some examples, this may be because an existing driving path has become overly worn, waterlogged, obstructed, or otherwise rendered unavailable for forestry machines drive through.

The monitoring information comprises human detection information. The computing device is configured to generate an alert in response to a detection of a human within a threshold distance from one of the one or more forestry machines. Human detection information may include a binary assessment, such as 'human detected/not detected', for a designated area (e.g., the within the threshold distance from a forestry machine). The human detection information may be based on thermal imaging, visual imaging, and/or other sensor information, which may be further enhanced by image processing techniques and/or object recognition techniques.

Accordingly, an autonomous forestry operation may be carried out with greater safety, as there may be no human operator present in the forestry machine to identify the presence of a human and thus a human may be put at risk if they approach too closely to a forestry machine that is performing forestry operations, or in the driving path of the forestry machine. Such an approach may also be applied to forestry machines having operators, as the operators may not always have a complete awareness or understanding of their surrounding environment.

In some examples, the generated alert may be presented to an operator of a forestry machine. In other examples, the generated alert may be used to change a driving path of a forestry machine, or to cause a forestry machine to depower or otherwise cease performing forestry operations.

When determining a new driving path, the computing device may perform a process comprising obtaining an origin for the driving path, obtaining a destination for the driving path, and obtaining one or more criteria for the new driving path. Any of these may be determined by the computing device, or provided thereto from another device. For example, criteria for maximum length of a driving path may be communicated by a forestry machine based on a remaining electrical energy left in its energy storage, an environmental constraint corresponding to a ground impact on a driving path may be provided by a human operator prior to or during the forestry operations, and this information may be used when determining new driving paths.

Such information may equally be usable for deciding between existing driving paths that are available to a forestry machine, depending on the implementation.

Once the computing device has the necessary information and constraints, the computing device may proceed with solving one or more optimization functions having the origin, the destination, and the one or more criteria as constraints to generate the new driving path for the forestry machine, according to some examples.

Thus, it will be appreciated that an increasingly autonomous forestry operation can be employed through the implementation of the presently described forestry monitoring system. For example, as the prevalence of self-driving forestry machines increases in forestry settings, UAVs may serve an important role in monitoring and directing the navigation of the self-driving forestry machines through the forestry setting. As a consequence, the reliability of the navigation of these self-driving forestry machines can be ensured, as the forestry monitoring system can collect far more monitoring information in real time than, for example, a human operator/driver of a forestry machine.

Processing the collected information to determine monitoring information for the forestry site may comprise geolocating one or more objects in the forestry site. That is, objects may be identified in the collected information (e.g., visual image information) and the location of these objects in a co-ordinate system may be identified. The co-ordinate system may be a shared local co-ordinate system for the forestry machines, or may be a global co-ordinate system such as a high-precision latitude and longitude.

By geolocating objects in the collected information, forestry machines may simply be provided with a list of locations to avoid (or to move towards). The geolocated objects may be displayed on a map and/or may have their locations factored into calculations in respect of a path (re)calculation.

Geolocating one or more objects in the forestry site may comprise generating a global location reference for a plurality of objects, and generating local location references for each object of the plurality of objects such that each object can be geolocated based on a combination of the local location reference for said object and the global location reference generated for the plurality of objects. For example, a UAV may capture an image and may 'tag' or otherwise associate the image with the locations captured in the image, such as a range of latitudes and longitudes, and an orientation of the image. Then, objects identified in the image may be assigned a location reference that describes their location in the image. Accordingly, the geolocation of each object can be deduced from a combination of the image's overall location and the object's relative location in the image, rather than an individual latitude and longitude being determined for each identified object.

According to such an approach, an amount of data/information being sent between the UAV and the computing device and/or between the computing device and the forestry machine. In some examples, a global location reference may be predetermined or determined at the beginning of forestry operations and used thereafter, in combination with local location references for identified objects, for describing the locations of said identified objects.

Moreover, objects detected as having a motion (e.g., through analysis of geolocation data/history) may be tracked and have their future motion predicted. Therefore, even if there is no direct imaging from cameras on forestry machines or the UAV, an alert can still be generated in respect of potential incoming persons, animals, etc. Such an approach may advantageously enable an early warning of a potentially hazardous situation.

During flight of the UAV, the electrical energy storage powering the propulsion arrangement may be substantially depleted. The energy efficiency of the UAV is reduced by carrying an electrical energy storage that has a substantial weight, however, a smaller electrical energy storage does not allow for as long a flight time.

Hence, according to some examples, the monitoring system may further comprise a mobile charging station for recharging the electrical energy storage of the UAV, and moving throughout the forestry site such that the UAV is rarely an excessive distance from the mobile charging station. Thus, the size of the electrical energy storage can be optimised (i.e. minimised) and the downtime of the UAV (e.g. time spent going to and from a charging station) is reduced.

The mobile charging station may comprise a fuel reservoir, an electrical energy generator fuelled by a fuel from the fuel reservoir, and a traction arrangement powered by the electrical energy generator and configured to drive the mobile charging station from the first log harvesting location to a second log harvesting location.

The fuel reservoir may contain petroleum, diesel, a fuel cell, or some other fuel source suitable for powering an electrical energy generator. The traction arrangement may comprise a continuous track and/or a plurality of wheels suitable for navigating through the forestry site, which may have significantly uneven or irregular terrain.

In some examples, the mobile charging station may be comprised in one of the one or more forestry machines in the forestry site. Thus, the very forestry machine(s) that the UAV is likely to be nearby during operation are the same machine(s) that the UAV can use for recharging its electrical energy storage. Thus, even if the forestry machines move to a distant part of a forestry site (which can be a number of kilometres away from an operating base), the UAV has reliable access to means for recharging.

To recharge the UAV, the UAV and mobile charging station may each comprise a respective electrical coupling configured to mutually couple, thereby enabling charging of the electrical energy storage of the UAV by the electrical energy generator of the mobile charging station.

In some examples, the electrical coupling of the UAV may be arranged on an underside of the UAV, and the electrical coupling of the mobile charging station may be arranged on an upper side of the mobile charging station, thereby enabling mutual coupling of the respective electrical couplings by a vertical landing of the UAV onto the mobile charging station.

As a consequence, the UAV may more readily couple (engage, dock, interface, etc.) with the mobile charging station by a simple landing thereupon, thus further reducing potential downtime of the UAV and further ensuring that the monitoring carried out by the forestry monitoring system can be uninterrupted.

According to some examples, the computing device may be configured to obtain an electrical energy level of the electrical energy storage of the UAV and instruct the UAV to navigate to the mobile charging station in response to a determination that the obtained electrical energy level is below a minimum level. Such an operation may ensure that the UAV does not run out of electrical charge before it has an opportunity to recharge at the mobile charging station.

In some examples, the system may comprise a plurality of UAVs, which may simultaneously or on a rotating basis. For example, at least two of the UAVs may alternate in their operation in such a way that one UAV is charging at a same time the other is carrying out forestry monitoring. Thus, the forestry monitoring system may ensure constant monitoring of the forestry site and the forestry machines therein.

Thus, as will be appreciated from the forgoing, viewed from these aspects, there is provided a forestry monitoring system that enables an increased work efficiency and a reduced environmental impact for forestry operations.

Whilst the invention is susceptible to various modifications and alternative forms, specific embodiments are shown by way of example in the drawings as herein described in detail. It should be understood, however, that the detailed description herein and the drawings attached hereto are not intended to limit the invention to the particular form disclosed. Rather, the intention is to cover all modifications and alternatives falling within the scope of the appended claims.

Any reference to prior art documents or comparative examples in this specification is not to be considered as an admission that such prior art is widely known or forms part of the common general knowledge in the field.

As used in this specification, the words "comprise", "comprising", and similar words are not to be interpreted in the exclusive or exhaustive sense. In other words, they are intended to mean "including, but not limited to".

### BRIEF DESCRIPTION OF THE DRAWINGS

One or more embodiments will be described, by way of example only, and with reference to the following figures, in which:
Figure 1 schematically shows a forestry monitoring system, according to an embodiment;
Figure 2 shows an example overview of a forestry operation employing a forestry monitoring system, according to an embodiment; and
Figure 3 schematically shows a UAV coupled to a mobile charging unit, according to an embodiment.

### DETAILED DESCRIPTION

The present invention is described in the following by way of a number of illustrative examples. It will be appreciated that these examples are provided for illustration and explanation only and are not intended to be limiting on the scope of the present invention. Instead, the scope of the present invention is to be defined by the appended claims. Furthermore, although the examples may be presented in the form of individual embodiments, it will be recognised that the invention also covers combinations of the embodiments described herein.

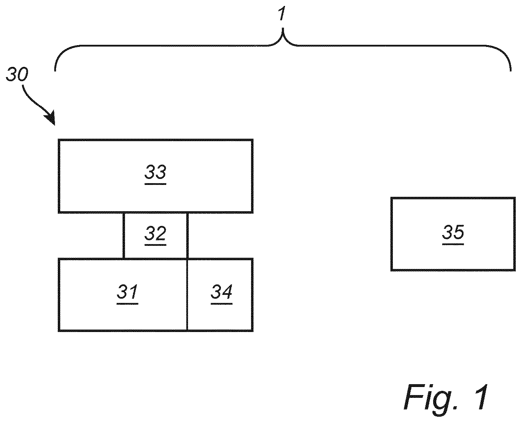

Figure 1 schematically shows a forestry monitoring system 1, according to an embodiment.

As shown in figure 1, the system 1 comprises a UAV 30 and a computing device 35. The UAV 30 comprises an electrical energy storage 31, an electric motor 32 powered by the electrical energy storage 31, and a propulsion arrangement 33 driven by the electric motor 32.

The electrical energy storage 31 may be a battery, one or more capacitors, or some other energy storage system, preferably being as energy dense as possible to allow for the UAV 30 to have as little weight as possible.

The electric motor 32 may be any suitable type of motor, but again may preferably be chosen for lightweight properties to reduce the weight of the UAV 30.

The propulsion arrangement 33 may comprise one or more rotors respectively attached to one or more propellers, arranged in such a way as to provide manoeuvrability to the UAV through and above the forestry site.

It will be appreciated that the propulsion arrangement 33 and the electric motor 32 may take any suitable form to allow for suitable propulsion of the UAV 30 but the specifics of their construction are not focussed on herein.

The UAV 30 may further comprise an imaging arrangement 34, which may include cameras, sensors and/or the like. The imaging arrangement 34 may be connected in any many (i.e. rigidly or moveably) to the UAV 30 and directed (or directable) in such a way to provide a suitable overview over a forestry site when the UAV 30 is manoeuvring therethrough or thereabove.

For example, the imaging arrangement 34 may comprise a stereo camera, LIDAR, a thermal imaging camera, and/or other suitable cameras or sensors.

As shown in figure 1, the system 1 may further comprise a computing device 35 for processing information collected by the imaging arrangement 34.

Although the computing device 35 is shown as a separate element to the UAV 30, it will be appreciate that the computing device 35 may instead be attached to the UAV 30 or integrated therein. In some examples, the computing device 35 may be incorporated into a machine (or other device) at the forestry site, for example one or more of the forestry machines. In other examples, the computing device 35 may be entirely remote from the forestry site, such as being hosted in a remote server environment such as a cloud computing environment or the like.

The choice as to where the computing device 35 may be situated may depend on the weight restrictions of the UAV 30, the data communication capabilities of the UAV and/or machines and devices at the forestry site and/or the degree of computational power required for processing collected information, to name a few examples.

For example, if the computing device 35 is in an external device such as a cloud computing environment, the UAV may comprise a transmitter for transmitting the collected information to the computing device 35, or this information may be relayed via short-range communications to an on-sire machine, which may then retransmit the information via longer range communications to the computing device 35 in the cloud computing environment.

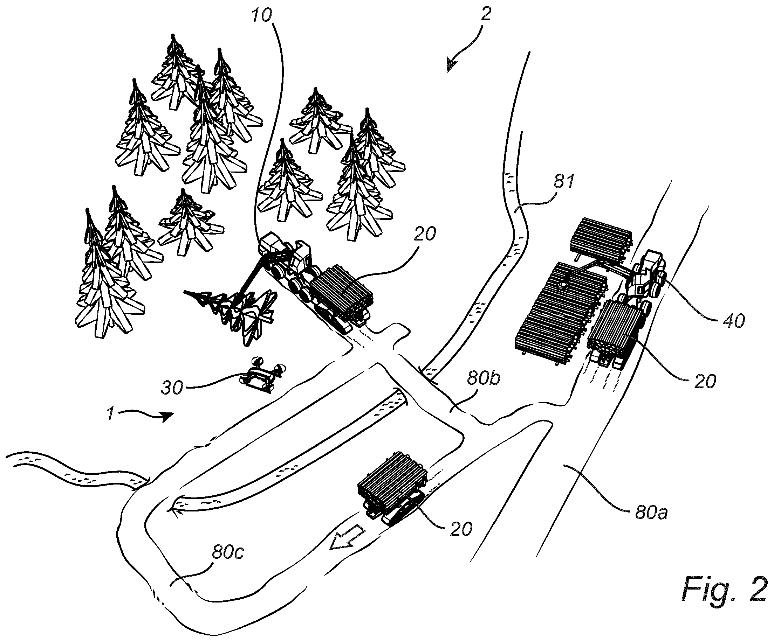

Figure 2 shows an example overview of a forestry operation at a forestry site 2, employing a forestry monitoring system, according to an embodiment.

The forestry site 2 comprises a number of driving paths 80a, 80b, and 80c. Driving path 80a is a primary base road, along which an unloading location has been established for an unloading of logs for further transport to an onward location. Driving paths 80b and 80c are alternative routes from the base road driving path 80a to a harvesting location where a harvester forestry machine 10 is harvesting logs.

As part of the forestry operations undergone at the forestry site 2, a plurality of self-driving shuttles 20 may navigate from the unloading location to the harvesting location (or to/from some intermediate location, depending on the specific implementation). Thus, a majority of ground impact may be caused by a driving of the shuttles 20 along the secondary paths 80b and 80c.

The system 1, comprising a UAV 30 being substantially the same or similar to the UAV described in relation to figure 1, can make path decisions for the forestry machines such as the self-driving shuttles 20, the self-driving unloading crane 40 at the unloading crane and/or the harvester 10. The nature of the path decision may vary depending on the forestry machine. The following discussion shall focus on the shuttles 20 as an example.

The driving paths 80 may have been determined by the computing device (not shown) at a previous time, or the driving paths may have been created by a human operator of the harvester 10. The UAV 30 may collect information about the forestry site 2 and provide this information to the computing device for processing, at which point the computing device may detect the existing driving paths 80, the forestry machines 10, 20, 40, the creek 81 running through the forestry site, the unloading location, the harvesting location, a number of trees in the forestry site, a quality of tree, and/or other monitoring information that may assist in making path decisions for the forestry machines 10, 20, 40.

A shuttle 20 may, after unloading logs at an unloading location, be instructed to navigate back to the harvesting location so that the harvester 10 can load more logs onto the shuttle 20. The location of the harvester 10 may be provided to the shuttle by the system 1, as well as a path decision for navigating thereto.

For example, the shuttle 20 may have an option to choose between driving path 80b and 80c. The system 1 may determine a path decision, i.e. path 80b or 80c, based on any number of relevant factors.

For example, the system 1 may determine a depth of an impression left on the driving paths 80b, 80c (i.e. the ground impact caused by the shuttles 20), an amount of water on the paths 80b, 80c, (e.g. from the creek 81), and/or a topology of the forestry site 2, to name a few examples. The computing device may also be provided with an energy level of the shuttle 20, which may place a constraint on a length of a path 80 that the shuttle 20 can travel down before running out of electrical energy.

One or more factors may be weighed against each other when determining the path decision, for example in the application of ML or AI techniques by the computing device. To give an example, path 80b may be determined as having suffered a greater ground impact and waterlogging, but the shuttle 20 may communicate that it is low on electrical charge. Thus, the system 1 may make a path decision to direct the shuttle 20 down path 80b as an exceptional case, and direct a subsequent shuttle 20 having sufficient charge along path 80c.

If neither path 80b nor 80c are suitable, according to an assessment by the computing device, the shuttle may be instructed to go down a new driving path to the harvester.

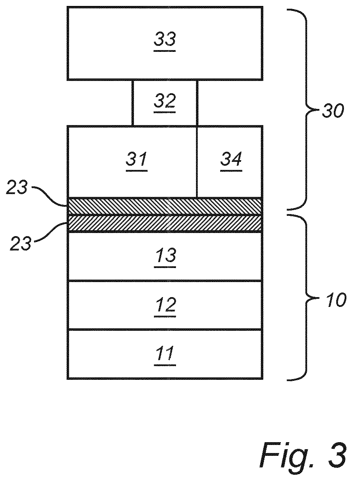

Figure 3 schematically shows a UAV 30 coupled to a mobile charging unit 10, according to an embodiment.

The UAV 30 may be substantially the same or similar to the UAV described previously in relation to figures 1 and 2. Figure 3 further shows a mobile charging station 10 having a fuel reservoir 12 and an electrical energy generator 13 fuelled by a fuel from the fuel reservoir 12. In some examples, the electrical energy generator 13 may comprise an internal combustion engine, a fuel cell, or some other means of electrical energy production.

In examples where the electrical energy generator 13 comprises an internal combustion engine, the engine may be operated at an optimum RPM for driving the electrical energy generator so as to optimise the energy efficiency of the mobile charging station 10.

The mobile charging station may further comprise a traction arrangement 11 such as a continuous track or a plurality of wheels. In some examples, the mobile charging station 10 may be comprised in one of the forestry machines in the forestry site, such as the harvester 10 shown in figure 2.

As shown in figure 3, the UAV 30 and the mobile charging station 10 may each comprise a respective electrical coupling 23 which, when coupled, enable the charging of the electrical energy storage 31 of the UAV 30 via the electrical energy generator 13 of the mobile charging station 10.

Although the electrical couplings 23 of the UAV 30 and the mobile charging station 10 are shown as being at a lower side and upper side, respectively, it will be appreciated that this is just one example placement for the couplings 23.

In other examples, the coupling 23 of the mobile charging station 10 and/or the UAV 30 may be on a side surface thereof, or at some other position. Preferably, the couplings 23 are arranged in such a way as to allow for a quick engagement/disengagement, preferably under the UAV's 30 own action (i.e. without human intervention).

Although specific examples have been referred to in the figures, it should be appreciated that these are not intended to limit the scope of the invention, which instead is intended to be defined by the scope of the appended claims.

## Claims

1. A forestry monitoring system (1) comprising:
an unmanned aerial vehicle, UAV (30); and
a computing device (35);
wherein the UAV comprises:
an electrical energy storage (31);
an electric motor (32) powered by the electrical energy storage;
a propulsion arrangement (33) driven by the electric motor and configured to aerially maneuver the UAV; and
an imaging arrangement (34) configured to collect information about a forestry site (2), the forestry site having one or more forestry machines (10, 20, 40) performing forestry operations therein; and
wherein the computing device is configured to:
obtain the collected information from the UAV;
process the collected information to determine monitoring information for the forestry site; and
determine a path decision for at least one of the one or more forestry machines based on the determined monitoring information of the forestry site;
charactensed in that the monitoring information comprises human detection information; and in that the computing device is configured to generate an alert in response to a detection of a human within a threshold distance from one of the one or more forestry machines.

2. The forestry monitoring system according to claim 1, wherein:
the UAV further comprises a transmitter configured to transmit the collected information to the computing device; and
the computing device is remote from the UAV.

3. The forestry monitoring system according to claim 1 or claim 2, wherein:
the imaging arrangement comprises at least one of:
a RGB camera;
a stereo camera;
RADAR;
LIDAR; and
a thermal imaging camera.

4. The forestry monitoring system according to any preceding claim, wherein:
the monitoring information for the forestry site comprises at least one of:
a position of at least one forestry machine;
one or more existing driving paths (80) in the forestry site;
a depth of an impression left by a forestry machine on a driving path;
an amount of accumulated water on a driving path;
a location of an obstruction in the forestry site;
a topology of the forestry site;
a tree number assessment for trees in the forestry site;
a tree quality assessment for trees in the forestry site;
an incidence of fire in the forestry site; and
a progress of the forestry operations in the forestry site.

5. The forestry monitoring system according to any preceding claim, wherein:
the path decision comprises at least one of:
selecting a driving path for the forestry machine from a plurality of determined existing driving paths in the forestry site; and
determining a new driving path for the forestry machine.

6. The forestry monitoring system according to claim 5, wherein:
determining a new driving path for the forestry machine comprises:
obtaining an origin for the driving path;
obtaining a destination for the driving path;
obtaining one or more criteria for the new driving path; and
solving one or more optimization functions having the origin, the destination, and the one or more criteria as constraints to generate the new driving path for the forestry machine.

7. The forestry monitoring system according to any preceding claim, wherein:
processing the collected information to determine monitoring information for the forestry site comprises geolocating one or more objects in the forestry site.

8. The forestry monitoring system according to claim 7, wherein:
geolocating one or more objects in the forestry site comprises generating a global location reference for a plurality of objects, and generating local location references for each object of the plurality of objects such that each object can be geolocated based on a combination of the local location reference for said object and the global location reference generated for the plurality of objects.

9. The forestry monitoring system according to claim 8, wherein:
the computing device is further configured to track a geolocated object and/or predict a future motion of the geolocated object.

10. The forestry monitoring system according to any preceding claim, further comprising:
a mobile charging station (10), comprising:
a fuel reservoir (12);
an electrical energy generator (13) fuelled by a fuel from the fuel reservoir; and
a traction arrangement (11) powered by the electrical energy generator and configured to drive the mobile charging station from the first log harvesting location to a second log harvesting location; and
wherein the UAV and mobile charging station each comprise a respective electrical coupling (23) configured to mutually couple, thereby enabling charging of the electrical energy storage of the UAV by the electrical energy generator of the mobile charging station.

11. The forestry monitoring system according to claim 10, further comprising the one or more forestry machines and wherein the mobile charging station is comprised in one of the one or more forestry machines.

12. The forestry monitoring system according to claim 10 or claim 11, wherein:
the computing device is configured to:
obtain an electrical energy level of the electrical energy storage of the UAV; and
instruct the UAV to navigate to the mobile charging station in response to a determination that the obtained electrical energy level is below a minimum level.

13. The forestry monitoring system according to any of claims 10 to 12, wherein:
the electrical coupling of the UAV is arranged on an underside of the UAV, and the electrical coupling of the mobile charging station is arranged on an upper side of the mobile charging station, thereby enabling mutual coupling of the respective electrical couplings by a vertical landing of the UAV onto the mobile charging station.

## Patentansprüche

1. System zur Überwachung der Forstwirtschaft (1), umfassend:
ein unbemanntes Luftfahrzeug, UAV (30); und
eine Rechenvorrichtung (35);
wobei das UAV Folgendes umfasst:
einen elektrischen Energiespeicher (31);
einen Elektromotor (32), der von dem elektrischen Energiespeicher mit Strom versorgt wird;
eine Schubanordnung (33), die von dem Elektromotor angetrieben wird und dazu konfiguriert ist, das UAV in der Luft zu manövrieren; und
eine Bildgebungsanordnung (34), die dazu konfiguriert ist, Informationen über einen Forstwirtschaftsstandort (2) zu sammeln, wobei der Forstwirtschaftsstandort eine oder mehrere Forstwirtschaftsmaschinen (10, 20, 40) aufweist, die darin Forstwirtschaftsarbeiten durchführen; und
wobei die Rechenvorrichtung zu Folgendem konfiguriert ist:
Erhalten der gesammelten Informationen von dem UAV;
Verarbeiten der gesammelten Informationen, um Überwachungsinformationen für den Forstwirtschaftsstandort zu bestimmen; und
Bestimmen einer Wegentscheidung für mindestens eine der einen oder mehreren Forstwirtschaftsmaschinen basierend auf den bestimmten Überwachungsinformationen über den Forstwirtschaftsstandort;
**dadurch gekennzeichnet, dass** die Überwachungsinformationen Informationen über eine Erkennung von Menschen umfassen; und dass die Rechenvorrichtung dazu konfiguriert ist, einen Alarm als Reaktion auf eine Erkennung eines Menschen innerhalb eines Schwellenabstands zu einer der einen oder mehreren Forstwirtschaftsmaschinen zu erzeugen.

2. System zur Überwachung der Forstwirtschaft nach Anspruch 1, wobei:
das UAV ferner einen Sender umfasst, der dazu konfiguriert ist, die gesammelten Informationen an die Rechenvorrichtung zu übertragen; und
die Rechenvorrichtung von dem UAV entfernt ist.

3. System zur Überwachung der Forstwirtschaft nach Anspruch 1 oder Anspruch 2, wobei:
die Bildgebungsanordnung mindestens eines von Folgendem umfasst:
eine RGB-Kamera;
eine Stereokamera;
RADAR;
LIDAR; und
eine Wärmebildkamera.

4. System zur Überwachung der Forstwirtschaft nach einem der vorhergehenden Ansprüche, wobei:
die Überwachungsinformationen für den Forstwirtschaftsstandort mindestens eines von Folgendem umfassen:
eine Position mindestens einer Forstwirtschaftsmaschine;
einen oder mehrere bestehende Fahrwege (80) an dem Forstwirtschaftsstandort;
eine Tiefe eines Abdrucks, den eine Forstwirtschaftsmaschine auf einem Fahrweg hinterlässt;
eine Menge an angesammelten Wassers auf einem Fahrweg;
einen Ort eines Hindernisses an dem Forstwirtschaftsstandort;
eine Topologie des Forstwirtschaftsstandorts;
eine Bewertung einer Anzahl von Bäumen an dem Forstwirtschaftsstandort;
eine Bewertung einer Qualität von Bäumen an dem Forstwirtschaftsstandort;
ein Auftreten von Feuer an dem Forstwirtschaftsstandort; und einen Fortschritt der Forstwirtschaftsarbeiten an dem Forstwirtschaftsstandort.

5. System zur Überwachung der Forstwirtschaft nach einem der vorhergehenden Ansprüche, wobei:
die Wegentscheidung mindestens eines von Folgendem umfasst:
Auswählen eines Fahrwegs für die Forstwirtschaftsmaschine aus einer Vielzahl von bestimmten bestehenden Fahrwegen an dem Forstwirtschaftsstandort; und
Bestimmen eines neuen Fahrwegs für die Forstwirtschaftsmaschine.

6. System zur Überwachung der Forstwirtschaft nach Anspruch 5, wobei:
das Bestimmen eines neuen Fahrwegs für die Forstwirtschaftsmaschine Folgendes umfasst:
Bestimmen eines Ausgangspunkts für den Fahrweg;
Bestimmen eines Zielpunkts für den Fahrweg;
Erhalten eines oder mehrerer Kriterien für den neuen Fahrweg; und
Lösen einer oder mehrerer Optimierungsfunktionen, die den Ausgangspunkt, den Zielpunkt und das eine oder die mehreren Kriterien als Einschränkungen aufweisen, um den neuen Fahrweg für die Forstwirtschaftsmaschine zu erzeugen.

7. System zur Überwachung der Forstwirtschaft nach einem der vorhergehenden Ansprüche, wobei:
das Verarbeiten der gesammelten Informationen, um Überwachungsinformationen für den Forstwirtschaftsstandort zu bestimmen ein Geolokalisieren eines oder mehrerer Objekte an dem Forstwirtschaftsstandort umfasst.

8. System zur Überwachung der Forstwirtschaft nach Anspruch 7, wobei:
das Geolokalisieren eines oder mehrerer Objekte an dem Forstwirtschaftsstandort derart ein Erzeugen einer globalen Ortsreferenz für eine Vielzahl von Objekten und ein Erzeugen lokaler Ortsreferenzen für jedes Objekt der Vielzahl von Objekten umfasst, dass jedes Objekt basierend auf einer Kombination der lokalen Ortsreferenz für das Objekt und der für die Vielzahl von Objekten erzeugten globalen Ortsreferenz geolokalisiert werden kann.

9. System zur Überwachung der Forstwirtschaft nach Anspruch 8, wobei:
die Rechenvorrichtung dazu konfiguriert ist, ein geolokalisiertes Objekt zu verfolgen und/oder eine zukünftige Bewegung des geolokalisierten Objekts vorherzusagen.

10. System zur Überwachung der Forstwirtschaft nach einem der vorhergehenden Ansprüche, ferner umfassend:
eine mobile Ladestation (10), umfassend:
ein Kraftstoffreservoir (12);
einen elektrischen Energiegenerator (13), der mit einem Kraftstoff aus dem Kraftstoffreservoir gespeist wird; und
eine Traktionsanordnung (11), die von dem elektrischen Energiegenerator mit Strom versorgt wird und dazu konfiguriert ist, die mobile Ladestation von dem ersten Holzernteort zu einem zweiten Holzernteort zu fahren; und
wobei das UAV und die mobile Ladestation jeweils eine jeweilige elektrische Kupplung (23) umfassen, die dazu konfiguriert sind, sich gegenseitig zu kuppeln, wodurch ein Laden des elektrischen Energiespeichers des UAV durch den elektrischen Energiegenerator der mobilen Ladestation ermöglicht wird.

11. System zur Überwachung der Forstwirtschaft nach Anspruch 10, ferner umfassend die eine oder mehreren Forstwirtschaftsmaschinen und wobei
die mobile Ladestation in einer der einen oder mehreren Forstwirtschaftsmaschinen enthalten ist.

12. System zur Überwachung der Forstwirtschaft nach Anspruch 10 oder Anspruch 11, wobei:
die Rechenvorrichtung zu Folgendem konfiguriert ist:
Erhalten eines elektrischen Energiepegels des elektrischen Energiespeichers des UAV; und
Anweisen des UAV, zu der mobilen Ladestation zu navigieren, als Reaktion auf eine Bestimmung, dass der erhaltene elektrische Energiepegel unter einem Mindestpegel ist.

13. System zur Überwachung der Forstwirtschaft nach einem der Ansprüche 10 bis 12, wobei:
die elektrische Kupplung des UAV an einer Unterseite des UAV angeordnet ist und die elektrische Kupplung der mobilen Ladestation an einer Oberseite der mobilen Ladestation angeordnet ist, wodurch ein gegenseitiges Kuppeln der jeweiligen elektrischen Kupplungen durch ein vertikales Landen des UAV auf der mobilen Ladestation ermöglicht wird.

## Revendications

1. Système de surveillance forestier (1) comprenant :
un véhicule aérien sans pilote, UAV (30) ; et
un dispositif informatique (35) ;
dans lequel l'UAV comprend :
un stockage d'énergie électrique (31) ;
un moteur électrique (32) alimenté par le stockage d'énergie électrique ;
un agencement de propulsion (33) entraîné par le moteur électrique et configuré pour manœuvrer en vol l'UAV ; et
un agencement d'imagerie (34) configuré pour recueillir des informations sur un site forestier (2), le site forestier possédant une ou plusieurs machines forestières (10, 20, 40) y effectuant des opérations forestières ; et
dans lequel le dispositif informatique est configuré pour :
obtenir les informations recueillies par l'UAV ;
traiter les informations recueillies pour déterminer des informations de surveillance du site forestier ; et
déterminer une décision de trajectoire pour au moins l'une de la une ou des plusieurs machines forestières sur la base des informations de surveillance déterminées du site forestier ; **caractérisé en ce que** les informations de surveillance comprennent des informations de détection humaine ; et **en ce que** le dispositif informatique est configuré pour générer une alerte en réponse à une détection d'une personne à l'intérieur d'une distance seuil de la une ou des plusieurs machines forestières.

2. Système de surveillance forestier selon la revendication 1, dans lequel :
l'UAV comprend en outre un émetteur configuré pour transmettre les informations recueillies au dispositif informatique ; et le dispositif informatique est distant de l'UAV.

3. Système de surveillance forestier selon la revendication 1 ou la revendication 2, dans lequel :
l'agencement d'imagerie comprend au moins l'un des éléments suivants :
une caméra RGB ;
une caméra stéréo ;
un RADAR ;
un LIDAR ; et
une caméra d'imagerie thermique.

4. Système de surveillance forestier selon une quelconque revendication précédente, dans lequel :
les informations de surveillance du site forestier comprennent au moins l'un des éléments suivants :
une position d'au moins une machine forestière ;
une ou plusieurs trajectoires de conduite existantes (80) sur le site forestier ;
une profondeur d'une empreinte laissée par une machine forestière sur une trajectoire de conduite ;
une quantité d'eau accumulée sur une trajectoire de conduite ; un emplacement d'un obstacle sur le site forestier ;
une topologie du site forestier ;
une évaluation du nombre d'arbres sur le site forestier ;
une évaluation de la qualité des arbres sur le site forestier ; une incidence d'un incendie sur le site forestier ; et
un état d'avancement des opérations forestières sur le site forestier.

5. Système de surveillance forestier selon une quelconque revendication précédente, dans lequel :
la décision de trajectoire à suivre comprend au moins l'un des éléments suivants :
la sélection d'une trajectoire de conduite pour la machine forestière à partir d'une pluralité de trajectoires de conduite existantes déterminées sur le site forestier ; et
la détermination d'une nouvelle trajectoire de conduite pour la machine forestière.

6. Système de surveillance forestier selon la revendication 5, dans lequel :
la détermination d'une nouvelle trajectoire de conduite pour la machine forestière comprend :
l'obtention d'une origine pour la trajectoire de conduite ; l'obtention d'une destination pour la trajectoire de conduite ; l'obtention d'un ou de plusieurs critères pour la nouvelle trajectoire de conduite ; et
la résolution d'une ou de plusieurs fonctions d'optimisation présentant l'origine, la destination et le un ou les plusieurs critères comme contraintes pour générer la nouvelle trajectoire de conduite de la machine forestière.

7. Système de surveillance forestier selon une quelconque revendication précédente, dans lequel :
le traitement des informations recueillies pour déterminer des informations de surveillance du site forestier comprend la géolocalisation d'un ou de plusieurs objets sur le site forestier.

8. Système de surveillance forestier selon la revendication 7, dans lequel :
la géolocalisation d'un ou de plusieurs objets sur le site forestier comprend la génération d'une référence de localisation globale pour une pluralité d'objets, et la génération de références de localisation locales pour chaque objet de la pluralité d'objets, de sorte que chaque objet puisse être géolocalisé sur la base d'une combinaison de la référence de localisation locale dudit objet et de la référence de localisation globale générée pour la pluralité d'objets.

9. Système de surveillance forestier selon la revendication 8, dans lequel :
le dispositif informatique est en outre configuré pour suivre un objet géolocalisé et/ou prédire un mouvement futur de l'objet géolocalisé.

10. Système de surveillance forestier selon une quelconque revendication précédente, comprenant en outre :
une station de recharge mobile (10), comprenant :
un réservoir de carburant (12) ;
un générateur d'énergie électrique (13) alimenté par un carburant provenant du réservoir de carburant ; et
un agencement de traction (11) alimenté par le générateur d'énergie électrique et configuré pour déplacer la station de recharge mobile du premier site de récolte de bois à un second site de récolte de bois ; et
dans lequel l'UAV et la station de recharge mobile comprennent chacun(e) un couplage électrique (23) respectif configuré pour se coupler mutuellement, permettant ainsi la recharge du stockage d'énergie électrique de l'UAV par le générateur d'énergie électrique de la station de recharge mobile.

11. Système de surveillance forestier selon la revendication 10, comprenant en outre la une ou les plusieurs machines forestières et dans lequel
la station de recharge mobile est comprise dans l'une de la une ou des plusieurs machines forestières.

12. Système de surveillance forestier selon la revendication 10 ou la revendication 11, dans lequel :
le dispositif informatique est configuré pour :
obtenir un niveau d'énergie électrique du stockage d'énergie électrique de l'UAV ; et
ordonner à l'UAV de se diriger vers la station de recharge mobile en réponse à une détermination que le niveau d'énergie électrique obtenu est inférieur à un niveau minimum.

13. Système de surveillance forestier selon l'une quelconque des revendications 10 ou 12, dans lequel :
le raccordement électrique de l'UAV est agencé sur un côté inférieur de l'UAV, et le raccordement électrique de la station de recharge mobile est agencé sur un côté supérieur de la station de recharge mobile, permettant ainsi le couplage mutuel des raccordements électriques respectifs par un atterrissage vertical de l'UAV sur la station de recharge mobile.
